# EUROPÄISCHE PATENTSCHRIFT

(11) **EP 2 896 909 B1**
(45) Veröffentlichungstag und Bekanntmachung des Hinweises auf die Patenterteilung: **07.04.2021**
(21) Anmeldenummer: 14195673.0
(22) Anmeldetag: 01.12.2014
(51) Int. Cl.: F24S 20/67, F24S 25/35, F24S 25/61, F24S 25/632, F24S 40/44, F24S 80/70

(54) **Solarmodul-Indachmontagesystem**
In-roof solar module mounting system
Système de montage en toiture de modules solaires

(30) Priorität: 29.11.2013 DE 102013224543
(43) Veröffentlichungstag der Anmeldung: 22.07.2015
(73) Patentinhaber: Schmidt, Christoph, 91710 Gunzenhausen (DE)
(72) Erfinder: Schmidt, Christoph, 91710 Gunzenhausen (DE)
(74) Vertreter: Pfenning, Meinig & Partner mbB

(56) Entgegenhaltungen:
- EP-A2- 0 905 795
- EP-A2- 1 286 401
- EP-A2- 2 353 191
- EP-A2- 2 372 269
- EP-A2- 2 381 188
- WO-A1-2013/114767
- DE-A1-102004 026 786
- DE-A1-102008 008 253
- DE-U1- 8 230 951
- DE-U1-202010 005 003
- DE-U1-202010 017 422
- JP-A- 2001 164 713
- KAMIES W T ET AL: "Frame for mounting sloping solar panels - uses frame members with interconnected channels to collect condensate and carry it away", WPI / THOMSON,, vol. 1999, no. 14, 5 January 1999 (1999-01-05), XP002659919, -& NL 1 006 490 C2 (ALCOA COMPRI ALUMINIUM [NL]) 5 January 1999 (1999-01-05)

## Beschreibung

Die vorliegende Erfindung betrifft ein Solarmodul-Indachmontagesystem für die Montage von Photovoltaikmodulen als Indachsystem.

Bei Montagesystemen für die Montage von Photovoltaikmodulen auf Gebäuden unterscheidet man zwischen sogenannten Aufdach- und Indachsystemen. Aufdachsysteme erlauben die Montage von Photovoltaikmodulen unter Beibehaltung der konventionellen Dacheindeckung (z.B. Ziegel). Hierbei verwendet man z.B. Dachhaken, die unter den Ziegeln auf der Unterkonstruktion befestigt werden und die unterhalb der Ziegel herauskragen. An dem herauskragenden Teil der Dachhaken werden dann Montageschienen zum Festklemmen und/oder Einlegen der Photovoltaikmodule befestigt. Ein Beispiel hierfür ist das Montagesystem "TRIC" der Firma FR-Frankensolar GmbH.

Bei Indachsystemen hingegen bilden die Module selbst die regendichte Dachhaut. Hierbei gibt es Systeme, die entweder ungerahmte Module (z.B.

"Cappa" der Firma Conergy), mit Standardrahmen versehene Module (z.B. "TRI-ROOF" der Firma TRITEC) oder Einleg-Klemm-System oder mit Spezialrahmen versehene Photovoltaikmodule (z.B. "Esyln" der Firma Solarwatt) verwenden.

Des Weiteren offenbart die Druckschrift EP 1 286 401 A2 ein Montagesystem für gerahmte Solarmodule mit mindestens zwei sich horizontal erstreckenden, parallel zueinander angeordneten Halteprofilen zum Halten mindestens eines Solarmoduls und mit Befestigungsmitteln zur Befestigung der Halteprofile auf einem Dach oder an einer Fassade, wobei jedes Halteprofil zwei in entgegengesetzten Richtungen offene Aufnahmetaschen aufweist, die zur Aufnahme je einer Kante des mindestens einen Solarmoduls geeignet sind, dadurch gekennzeichnet, daß jedes Halteprofil gestaltet ist, um in jeder Aufnahmetasche bedarfsweise die ortsfeste Anordnung einer Distanzbrücke zur Anpassung an die Rahmenlänge bzw. -breite des jeweiligen Solarmoduls und/oder einer Distanzbrücke zur Anpassung an die Rahmenhöhe des jeweiligen Solarmoduls zu ermöglichen.

Die Druckschrift DE 10 2004 026 786 A1 beschreibt ein Halteprofil für ungerahmte Solarmodule, umfassend eine in seiner Längsrichtung ausgebildete i. w. U-förmige Aufnahmetasche zum Halten der Unterkante eines Solarmoduls, dadurch gekennzeichnet, dass die Aufnahmetasche von einem ersten Teil und einem zweiten Teil gebildet wird, wobei das erste Teil und das zweite Teil lösbar miteinander verbunden und derart gestaltet sind, dass die Weite der Aufnahmetasche einstellbar veränderbar ist, und ein Montagesystem mit demselben.

Die Druckschrift NL 1006490 C beschreibt einen Rahmen mit einer Vielzahl von Rahmenteilen zum Halten von einem oder mehreren Solarmodulen über einem abfallenden Dach. Die Rahmenteile weisen miteinander verbundene Kanäle zum Abführen von Kondenswasser auf. Dadurch können Leckageprobleme aufgrund von sich unter dem Solardach bildendem Kondenswasser verhindert werden.

Allen genannten Systemen gemeinsam ist die Komplexität der Systeme sowie eine aufwändige Montage mit zahlreichen Einzelteilen und damit verbundene hohe Kosten.

Die Aufgabe der vorliegenden Erfindung ist daher, ein Solarmodul-Indachmontagesystem bereit zu stellen, wodurch es möglich ist, mit geringstmöglichem Material- und Montageaufwand aus Standard-Photovoltaikmodulen (gerahmt oder ungerahmt) eine regendichte Dachhaut zu bilden.

Ein erfindungsgemäßes Solarmodul-Indachmontagesystem umfasst mindestens zwei benachbart angeordnete Solarmodule und mindestens eine Halteschiene, wobei die Halteschiene zwischen den zwei benachbart angeordneten Solarmodulen angeordnet ist und im Querschnitt einen ersten Einlegebereich aufweist, welcher eine Seitenkante eines ersten Solarmoduls aufnimmt, und einen zweiten Einlegebereich aufweist, der dem ersten Einlegebereich benachbart angeordnet ist und eine Seitenkante eines zweiten Solarmoduls aufnimmt, wobei das Solarmodul-Indachmontagesystem eine weitere Halteschiene und mindestens ein weiteres Solarmodul umfasst, wobei die weitere Halteschiene zur ersten Halteschiene fluchtend aneinanderstoßend angeordnet ist, und wobei das weitere Solarmodul in einen ersten oder zweiten Einlegebereich der weiteren Halteschiene eingelegt ist, wobei das Solarmodul-Indachmontagesystem trapezförmige Ablaufbleche zur vertikalen Ableitung von Regenwasser umfasst, wobei die trapezförmigen Ablaufbleche zwischen nebeneinander angeordneten Solarmodulen verschindelt eingelegt sind, wobei die Halteschienen jeweils an ihren Enden an der rechten und linken unteren Ecke ausgeklinkte Bereiche aufweisen, wobei die Halteschienen kürzer sind als die parallel zu den Halteschienen verlaufenden Seitenkanten der Solarmodule, wobei die Ablaufbleche unterhalb der in einer Linie zueinander angeordneten Stöße der Halteschienen in benachbarte ausgeklinkte Bereiche der Halteschienen derart eingelegt sind, dass die Ablaufbleche die Stöße abdecken.

Das erfindungsgemäße Solarmodul-Indachmontagsystem ermöglicht somit eine Montage der Solarmodule (Im Weiteren werden die Begriffe Solarmodul, Photovoltaikmodul und Modul äquivalent verwendet.) in einem Arbeitsschritt ohne Vormontage einer Unterkonstruktion auf einem Dach beziehungsweise irgendwelcher Bauteile an eventuell vorhandenen Modulrahmen.

In einer bevorzugten Ausgestaltung der Erfindung weisen die Halteschienen einen Mittelbereich zur Aufnahme oder Anordnung eines Befestigungsmittels auf, wobei der erste Einlegebereich benachbart zu dem Mittelbereich angeordnet ist und der zweite Einlegebereich dem ersten Einlegebereich und dem Mittelbereich benachbart angeordnet ist.

Vorteilhafterweise weißt der erste Einlegebereich eine obere und eine untere Anschlagsleiste auf, wobei die beiden Anschlagsleisten das Solarmodul von oben und unten, die Seitenkante des ersten Solarmoduls umgreifend, klemmend erfasst.

Ebenso kann der zweite Einlegebereich eine obere und untere Anschlagsleiste aufweisen, wobei die beiden Anschlagsleisten das Solarmodul von oben und unten, die Seitenkante des zweiten Solarmoduls umgreifend, klemmend erfasst.

Insbesondere kann die untere Anschlagsleiste des ersten Einlegebereichs U-förmig in Richtung des Mittelbereichs derart umgefalzt sein, das der Rahmen eines Solarmoduls den Falz hintergreifend in die Halteschiene einrastbar und/oder einklemmbar ist und/oder der Rahmen eines Solarmoduls formschlüssig mit der Halteschiene verbindbar ist.

In einer weiteren vorteilhaften Ausgestaltung der Erfindung kann die Halteschiene Auflageelemente zur Auflage der Halteschiene auf eine Stützvorrichtung, insbesondere auf Dachlatten, aufweisen und gegebenenfalls der Mittelbereich derart ausgestaltet sein, dass das Befestigungsmittel beim Befestigungsvorgang die Halteschiene in Richtung des ersten Einlegebereichs vorspannt.

Die Halteschiene kann vorteilhafter Weise einen Mittelsteg aufweisen, von dem ausgehend auf einer Seite des Mittelsteges sich die obere und untere Anschlagsleiste des ersten Einlegebereichs erstrecken und von dem ausgehend auf der anderen Seite des Mittelsteges sich die obere Anschlagsleiste des zweiten Einlegebereichs erstreckt.

Der Mittelsteg, die obere und die untere Anschlagsleiste des ersten Einlegebereichs und die obere Anschlagsleiste des zweiten Einlegebereichs sind dabei bevorzugt zu einer Seite des Mittelbereichs angeordnet und die untere Anschlagsleiste des zweiten Einlegebereichs ist bevorzugt zur gegenüberliegenden Seite des Mittelbereichs angeordnet, derart, dass dazwischen der Bereich zur Montage des Befestigungsmittels zugänglich bleibt.

Die untere Anschlagsleiste des zweiten Einlegebereichs kann an ihrem vom Mittelbereich abgewandten Ende eine Aufkantung aufweisen, die sich längs der Halteschiene erstreckt und eine Wasserablaufrinne bildet.

Ferner kann der Mittelbereich eine Durchgangsöffnung zur Aufnahme eines Befestigungselementes, insbesondere einer Schraube, aufweisen und/oder an der Unterseite der Halteschiene ein Eingriffs- oder Rastelement zum Eingreifen oder Verrasten der Halteschiene in oder mit einer Aufnahme eines Befestigungselementes aufweisen.

Gegebenenfalls kann die Halteschiene mittels eines Befestigungselements über ihren Mittelbereich oder mittels des Eingriffs- oder Rastelementes über ihren Mittelbereich an einem Befestigungselement mit Aufnahme an einer Oberfläche, insbesondere einem Gebäudedach oder einer Gebäudefassade befestigt sein.

Vorteilhafterweise kann zwischen die untere Anschlagsleiste des zweiten Einlegebereiches und das zweite Solarmodul eine Ablaufrinne, insbesondere ein Ablaufblech, eingelegt sein, dass sich längs der Halteschiene erstreckt und den Mittelbereich einschließlich des Befestigungsmittels überdeckt.

Des Weiteren können die Wasserablaufrinnen der Halteschienen an ihren Enden zumindest teilweise in ein zu den Halteschienen senkrecht verlaufendes Ablaufblech münden.

Besonders bevorzugt ist es, wenn die Mehrheit der Solarmodule, vorteilhafterweise sämtliche Solarmodule, in dem erfindungsgemäßen Solarmodul-Indachmontagesystem eine gleiche oder weitgehend gleiche Breite längs der Halteschiene, vorteilhafterweise eine gleiche oder weitgehend gleiche Breite und Länge und Dicke, aufweisen.

Es kann eine Transporteinheit für die Elemente eines vorbeschriebenen erfindungsgemäßen Solarmodul-Indachmontagesystems mit mindestens einem Solarmodul und mindestens einer Halteschiene sowie gegebenenfalls mindestens einer Ablaufrinne sowie gegebenenfalls mindestens einem Befestigungselement vorgesehen werden. Die Transporteinheit kann genau eine Verpackung sämtlicher genannter Komponenten des Solarmodul-Indachmontagesystems aufweisen, wobei keines der Außenmaße (Breite, Länge, Dicke) der Halteschiene sowie gegebenenfalls der mindestens einen Ablaufrinne sowie gegebenenfalls der Befestigungselemente größer ist als das 1,2-fache, vorteilhafterweise das 1,0-fache des Größten der Außenmaße (Breite, Länge, Dicke) des Solarmoduls.

Die Transporteinheit ermöglicht es, die Abmessungen der erforderlichen Montagematerialien (Profilstücke, Bleche etc.) so zu minimieren, dass sie den Photovoltaikmodulen herstellerseitig beigepackt werden können, ohne dass das Transportvolumen erhöht wird.

Vorzugsweise weißt das Solarmodul auf seiner Rückseite mindestens eine Aussparung und/oder die Verpackung mindestens eine innere oder äußere Aussparung auf, die durch die transportsichere Verpackung mindestens eines Solarmoduls bedingt und/oder ermöglicht ist, und vorzugsweise sind die mindestens eine Halteschiene sowie gegebenenfalls die mindestens eine Ablaufrinne sowie gegebenenfalls die Befestigungselemente in mindestens einer der Aussparungen angeordnet.

Auf diese Weise kann das Transportvolumen durch Ausnutzung der in den Modulverpackungen ohnehin zwangsläufig vorhandenen Hohl- und Zwischenräume gering gehalten werden.

Im Folgenden werden einige Beispiele einer Halteschiene, eines erfindungsgemäßen Solarmodul-Indachmontagesystems sowie einer Transporteinheit anhand von Figuren detaillierter beschrieben. Dabei werden verschiedene erfindungswesentliche oder vorteilhafte Elemente im Rahmen dieser Beispiele genannt. Ferner entsprechen in den Figuren gezeigte gleiche oder ähnliche Elemente gleichen oder ähnlichen Bezugszeichen.

Es zeigen
- Fig. 1: eine Halteschiene eines erfindungsgemäßen Solarmodul-Indachmontagesystems gemäß einem ersten Ausführungsbeispiel in einer vertikalen Schnittansicht,
- Fig. 2: eine Draufsicht auf eine Dachoberfläche mit gemäß dem ersten Ausführungsbeispiel montierten Solarmodulen,
- Fig. 3: ein Eindrehen einer Halteschiene gemäß dem ersten Ausführungsbeispiel zur Aufnahme einer Seitenkante eines Solarmoduls im ersten Einlegebereich,
- Fig. 4: ein Einlegen eines zweiten Solarmoduls in einen zweiten Einlegebereich einer Halteschiene gemäß dem ersten Ausführungsbeispiel,
- Fig. 5: eine Seitenansicht zweier aneinanderstoßender Halteschienen, die auf einer Dachlatte befestigt sind,
- Fig. 6: eine Halteschiene gemäß dem ersten Ausführungsbeispiel in einer vertikalen Schnittansicht mit vertikal angeordneten Ablaufblechen,
- Fig. 7: ein zweites Ausführungsbeispiel einer Halteschiene in einer vertikalen Schnittansicht,
- Fig. 8: ein drittes Ausführungsbeispiel einer Halteschiene in einer vertikalen Schnittansicht,
- Fig. 9: ein viertes und ein fünftes Ausführungsbeispiel einer Halteschiene in einer vertikalen Schnittansicht,
- Fig. 10: Beispiele für Ausführungsformen von Modulrahmen in einer vertikalen Schnittansicht,
- Fig. 11: ein sechstes Ausführungsbeispiel einer Halteschiene in einer vertikalen Schnittansicht,
- Fig. 12: ein Eindrehen der erfindungsgemäßen Halteschiene aus Fig. 11 zur Aufnahme einer Seitenkante eines Solarmoduls im ersten Einlegebereich in einer vertikalen Schnittansicht,
- Fig. 13: eine platzsparende Anordnung zweier Horizontalprofile zur Verpackung,
- Fig. 14: ein siebtes Ausführungsbeispiel einer Halteschiene für Solarmodul-Laminate,
- Fig. 15: die Halteschiene aus Fig. 14 in einer vertikalen Schnittansicht,
- Fig. 16: ein Eindrehen der Halteschiene aus Fig. 15 zur Aufnahme einer Seitenkante eines Solarmoduls im ersten Einlegebereich,
- Fig. 17: eine Befestigung der Halteschiene aus Fig. 15 auf einer Dachlatte,
- Fig. 18: ein Einlegen eines horizontalen Ablaufblechs in den zweiten Einlegebereich der Halteschiene aus Fig. 15,
- Fig. 19: ein Einlegen eines zweiten Solarmoduls in den zweiten Einlegebereich der Halteschiene aus Fig. 15,
- Fig. 20: ein Einklemmen des zweiten Solarmoduls in die Halteschiene aus Fig. 15,
- Fig. 21: eine Draufsicht auf eine Dachoberfläche mit einem montierten Solarmodul-Indachmontagesystem gemäß einem achten Ausführungsbeispiel,
- Fig. 22: eine vertikale Schnittansicht der Unterkonstruktion aus Fig. 21,
- Fig. 23: ein neuntes Ausführungsbeispiel einer Halteschiene in einer vertikalen Schnittansicht,
- Fig. 24: ein Eindrehen der Halteschiene aus Fig. 23 zur Aufnahme einer Seitenkante eines Solarmoduls im ersten Einlegebereich,
- Fig. 25: ein Eindrehen der Halteschiene aus Fig. 23 in eine Unterkonstruktion,
- Fig. 26: ein Einlegen eines zweiten Solarmoduls in einen zweiten Einlegebereich der Halteschiene aus Fig. 23.

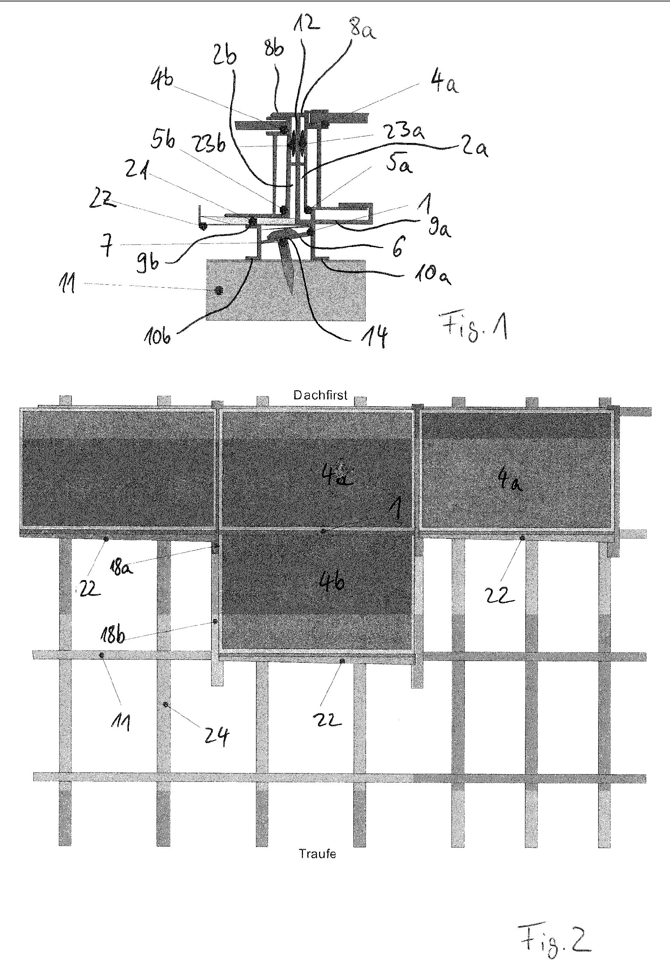

Fig. 1 zeigt eine Halteschiene eines erfindungsgemäßen. Solarmodul-Indachmontagesystems, die auf eine Dachlatte 11 als Stützvorrichtung montiert ist, gemäß einem ersten Ausführungsbeispiel in einer vertikalen Schnittansicht. Die Halteschiene 1 weist einen ersten Einlegebereich 2a zur Aufnahme einer Seitenkante 5a eines ersten Solarmoduls 4a und einen zweiten Einlegebereich 2b, der dem ersten Einlegebereich 2a benachbart angeordnet ist, zu einer Aufnahme einer Seitenkante 5b eines zweiten Solarmoduls 4b auf. Die Halteschiene 1 weist ferner einen Mittelbereich 6 zur Aufnahme oder Anordnung einer Schraube 7 als Befestigungsmittel auf. Der erste Einlegebereich 2a ist dabei benachbart zu dem Mittelbereich 6 angeordnet, und der zweite Einlegebereich 2b ist dem ersten Einlegebereich 2a und dem Mittelbereich 6 benachbart angeordnet. Der erste Einlegebereich 2a weist eine untere Anschlagsleiste 9a auf, welche den unteren Teil der Seitenkante 5a des ersten Solarmoduls 4a umgreift. Die untere Anschlagsleiste 9a des ersten Einlegebereichs 2a ist weiterhin U-förmig in Richtung des Mittelbereichs 6 derart umgefalzt, dass der Rahmen eines Solarmoduls 4a den Falz hintergreifend in die Halteschiene 1 einrastbar und/oder einklemmbar ist und/oder der Rahmen eines Solarmoduls formschlüssig mit der Halteschiene 1 verbindbar ist. Der zweite Einlegebereich 2b weist eine obere und eine untere Anschlagsleiste 8b, 9b auf, wobei die beiden Anschlagsleisten 8b, 9b das Solarmodul 4b von oben und unten, die Seitenkante 5b des zweiten Solarmoduls 4b umgreifend, klemmend umfasst. Die Halteschiene 1 weist weiterhin Auflageelemente 10a, 10b zur Auflage der Halteschiene 1 auf der Dachlatte 11 als Stützvorrichtung auf. Der Mittelbereich 6 ist weiterhin derart ausgestaltet, dass die Schraube 7 beim Befestigungsvorgang die Halteschiene 1 in Richtung des ersten Einlegebereichs 2a vorspannt. Die Halteschiene 1 weist auch einen Mittelsteg 12 auf, von dem ausgehend auf einer Seite des Mittelsteges 12 sich die obere und untere Anschlagsleiste 8b, 9b des zweiten Einlegebereichs 2b erstrecken und von dem ausgehend auf der anderen Seite des Mittelsteges 12 sich eine obere Anschlagsleiste 8a und die untere Anschlagsleiste 9b des ersten Einlegebereichs 2a erstrecken. Der Mittelsteg 12, die obere und die untere Anschlagsleiste 8a, 9a des ersten Einlegebereichs 2a und die obere Anschlagsleiste 9b des zweiten Einlegebereichs 2b sind zu einer Seite des Mittelbereichs 6 angeordnet, und die untere Anschlagsleiste 9b des zweiten Einlegebereichs 2b ist zur gegenüberliegenden Seite des Mittelbereichs 6 derart angeordnet, dass dazwischen der Bereich zur Montage der Schraube 7 zugänglich bleibt. Ferner weist die Halteschiene 1 im Mittelbereich 6 eine Durchgangsöffnung 14 zur Aufnahme der Schraube 7 auf. Unterhalb des Seitenrandbereichs 5b des zweiten Solarmoduls 4b kann zusätzlich in die Halteschiene 1 ein horizontales Ablaufblech 22 eingelegt sein, das an seinem der Halteschiene abgewandten Ende zur oberen Anschlagsleiste 8b hin aufgekantet ist. Die untere Anschlagsleiste 9b des zweiten Einlegebereichs 2b, der Seitenrand 5b und das horizontale Ablaufblech 22 sind dann mittels eines Klotzes 21 miteinander verklemmt. Das horizontale Ablaufblech 22 ist bevorzugt im Querschnitt trapezförmig gestaltet, so dass die firstseitige, obere Kante des Ablaufblechs 22 parallel zur Halteschiene 1 bzw. Traufe/First verläuft und die traufseitige, untere Kante des Ablaufblechs 22 mit einem Gefälle zur Halteschiene 1 verläuft. Dies ermöglicht einen verbesserten Wasserablauf. Derartig gestaltete Ablaufbleche lassen sich separat sehr leicht realisieren, beispielsweise durch Blech-Kantteile.

Fig. 2 zeigt eine Draufsicht auf eine Dachoberfläche mit einem erfindungsgemäßen Solarmodul-Indachmontagesystem.

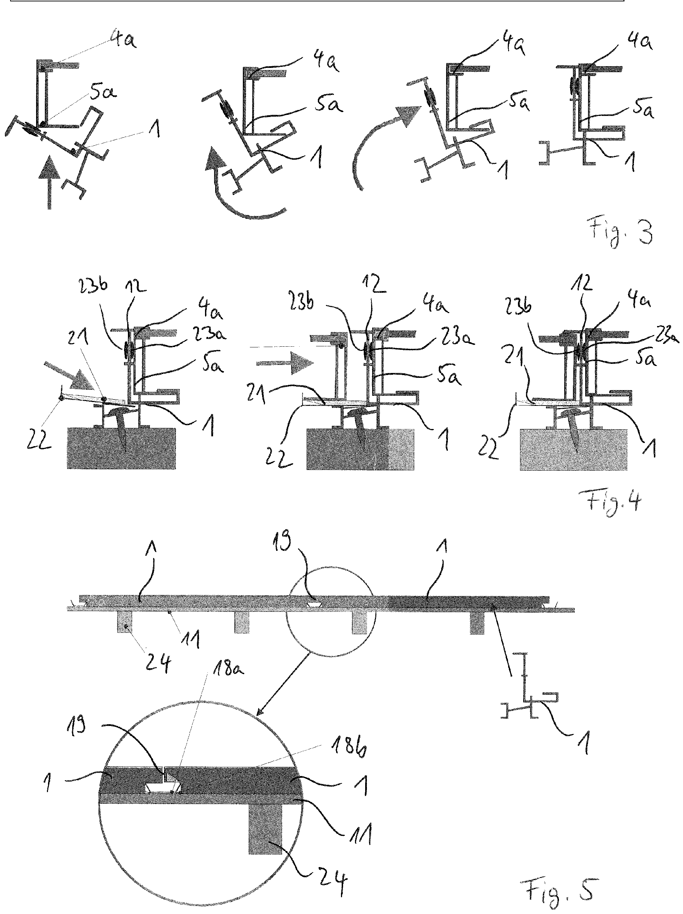

Fig. 3 zeigt ein Eindrehen einer Halteschiene 1 in einen Seitenrand 5a eines ersten Solarmoduls 4a zur Aufnahme des ersten Solarmoduls 4a in einem ersten Einlegebereich 2a der Halteschiene 1. Durch das Eindrehen der Halteschiene, wird der untere Seitenrand 5a eines oberen, ersten Solarmoduls 4a in die Halteschiene 1 eingedreht. Anschließend wird das obere, erste Solarmodul 4a über die Halteschiene 1 auf der Dachlattung 11 mit Schrauben 7 verschraubt. Nach dem Eindrehen der Halteschiene in die Seitenkante 5a bzw. in den Modulrahmen und durch die Befestigung der Halteschiene 1 an der Dachlattung 11 wird ein Zurückdrehen der Halteschiene 1 verhindert.

Danach wird das untere, zweite Solarmodul 4b, wie in Fig. 4 gezeigt, in die Halteschiene 1 eingeschoben. Um eventuell zwischen unterem, zweiten Solarmodul 4b und Halteschiene 1 eindringendes Regenwasser horizontal abzuleiten, kann ein horizontales Ablaufblech 22 in die Halteschiene 1 eingeclipst/geschoben werden. Um den Wasserablauf sicherzustellen sowie unterschiedliche Rahmenhöhen verwenden zu können, können Klötze 21, verteilt über die Länge der Halteschiene 1, in das Ablaufblech 22 eingelegt beziehungsweise mit diesem verschraubt werden. Durch Verwendung von Dichtprofilen 23a, 23b, z.B. aus EPDM, kann das Eindringen von Regenwasser zusätzlich verringert werden. Die Dichtprofile 23a, 23b sind jeweils beidseits im oberen Bereich des Mittelstegs 12 angeordnet.

Zur vertikalen Ableitung von Regenwasser werden trapezförmige Ablaufbleche 18a, 18b zwischen nebeneinander montierte Solarmodule verschindelt eingelegt. Hierzu sind, wie in Fig. 5 gezeigt, die Halteschienen 1 jeweils an der rechten und linken unteren Ecke ausgeklinkt. Gemäß Fig. 5 sind die vertikalen Ablaufbleche 18a, 18b derart angeordnet, dass diese in einer Linie zueinander angeordnete Stöße 19 benachbarter Halteschienen 1 abdecken. Fig. 5 zeigt eine Ansicht von Traufe Richtung First.

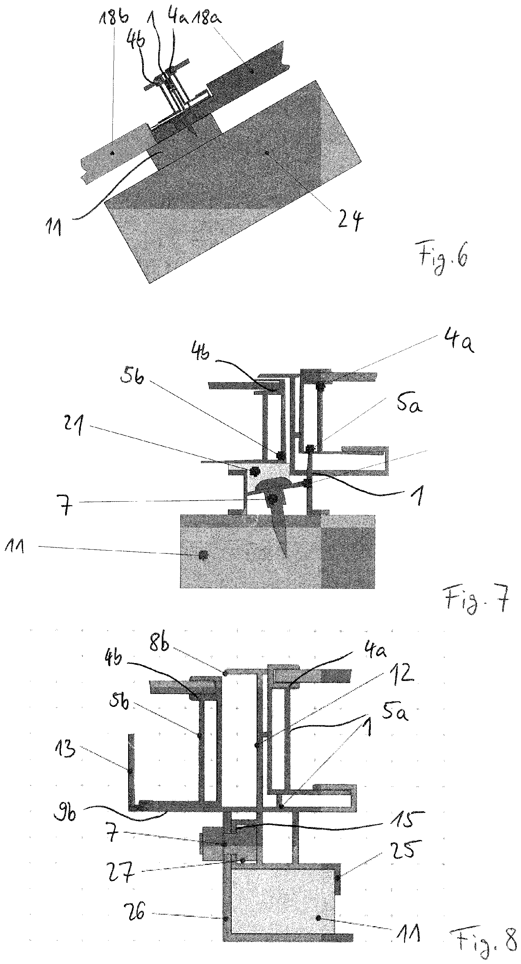

Wie in Fig. 6 gezeigt ist, können die Seitenwände der Ablaufbleche 18a, 18b im Mittelbereich eines Solarmoduls, also zwischen den Rahmenteilen des Modulrahmens, Ausklinkungen aufweisen, die in die Solarmodule eingreifen, um ein Abrutschen der Ablaufbleche 18a, 18b in Traufrichtung zu verhindern. Im Bereich der Ausklinkungen sind die Seitenwände höher als im Bereich direkt unter dem Modulrahmen ausgestaltet. Die Seitenwände der Ablaufbleche 18a, 18b können auch aufgebogen sein, so dass die Ablaufbleche 18a, 18b nicht in Traufrichtung abrutschen können, sondern an den Halteschienen 1 verhaken.

Eine Ausführungsform ohne Ablaufblech ist in Fig. 7 dargestellt. Als Modulauflage beziehungsweise zur Ausgleichsanpassung des Systems an verschiedene Rahmenhöhen der Solarmodule werden zwei bis drei Klötze 21 über die Länge der Halteschiene 1 verteilt verwendet.

Eine weitere Ausführungsform der Halteschiene 1 ohne Ablaufblech zeigt Fig. 8. Bei der Halteschiene in Fig. 8 weist die untere Anschlagsleiste 9b des zweiten Einlegebereichs 2b eine Aufkantung 13 in Richtung zur oberen Anschlagsleiste 8b auf. Die Aufkantung 13 verläuft dabei parallel zum Mittelsteg 12 der Halteschiene 1. Diese Ausführungsform bietet den Vorteil, dass kein zusätzliches Ablaufblech zur besseren Abdichtung benötigt wird. Die in Fig. 8 gezeigte Ausführungsform wird dadurch möglich, dass die Befestigung der Halteschiene 1 formschlüssig an der Dachlatte 11 mittels der Schraube 7 und einem Winkel 26 erfolgt. Die Schraube 7 wird in einem Schraubkanal 27 der Halteschiene 1 geführt. Dadurch bleibt die Dachlatte 11 unverletzt und es ist keine Befestigungsbohrung in der Halteschiene 1 erforderlich. Der Abstand zwischen dem dem Mittelsteg 12 abgewandten Ende der oberen Anschlagsleiste 8b und der Aufkantung 13 muss so breit sein, dass das untere, zweite Solarmodul 4b bei seiner Montage in die Halteschiene 1 eingelegt werden kann. Nach Einlegen des unteren, zweiten Solarmoduls 4b in die Halteschiene 1 wird es in Richtung des Mittelstegs 12 der Halteschiene 1 unter die obere Anschlagsleiste 8b geschoben. Ein weiterer Profilsteg 25 dient als Anschlag der Halteschiene 1 an der Dachlatte 11. In Fig. 8 weist die Halteschiene 1 mit anderen Worten im Mittelbereich 6 ein Eingriffs-/Rastelement 15 zum Eingreifen/Verrasten der Halteschiene 1 in den Schraubkanal 27 als Aufnahme eines Befestigungselementes auf.

Alternativ kann die Halteschiene 1 auch ohne den Winkel 26 und ohne Schraube 7 beispielsweise mittels eines Kabelbinders, einer Schlauchklemme oder einer Schelle direkt an der Dachlatte 11 befestigt werden.

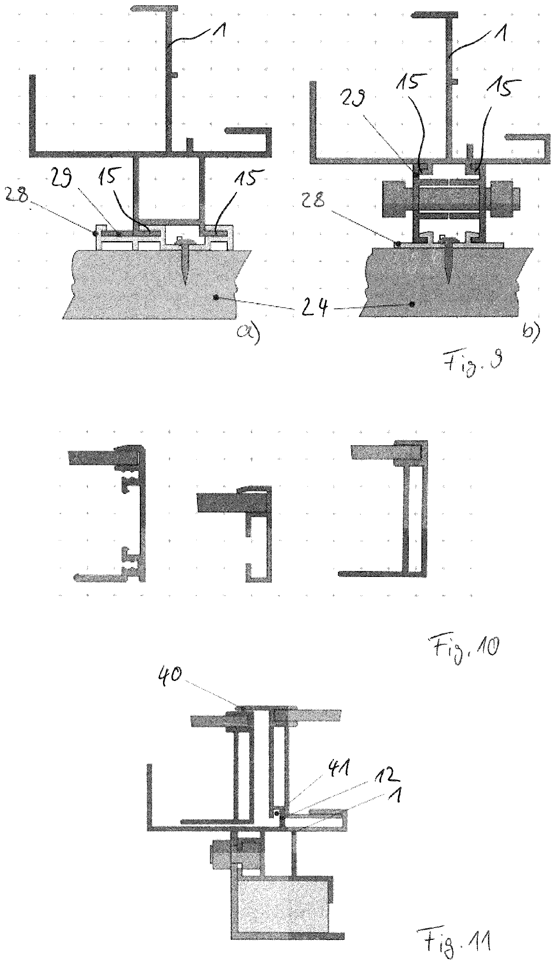

In Fig. 9A und 9B sind zwei weitere Ausführungsformen zur Befestigung der Halteschiene am Dachsparren 24 dargestellt. Dabei wird anstelle der Dachlatte ein Befestigungsprofil 28 als eine Aufnahme für ein Befestigungsmittel vorgesehen. An diesem wird die Halteschiene 1 durch Einschieben und Verklemmen mittels eines Klemmstücks 29 (siehe Fig. 9A) oder mittels eines Klemmwinkels 29 und einer Schraube 7 (siehe Fig. 9B) befestigt.

In Fig. 10 sind Beispiele für Ausführungsformen von Modulrahmen in einer vertikalen Schnittansicht dargestellt. Entsprechend der Geometrie des Modulrahmens muss die Halteschiene angepasst werden.

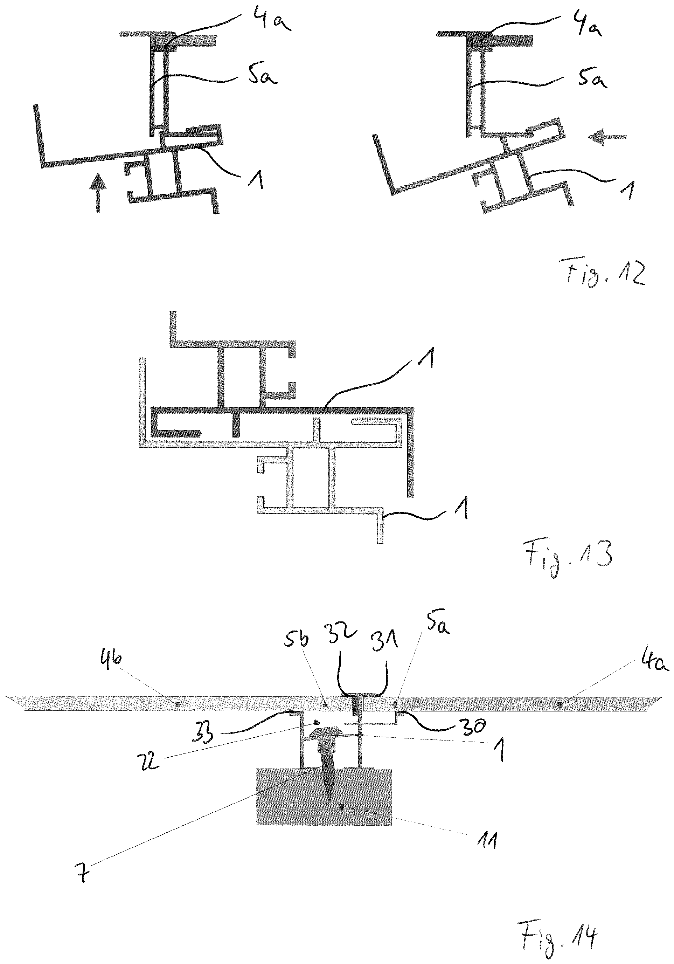

Fig. 11 zeigt eine weitere Ausführungsform, bei der das untere Profil, also der Seitenrand 5a, des Modulrahmens des oberen, ersten Moduls 4a eine Sonderform aufweist. Das untere Profil 5a weist einen Steg 40 auf, unter den das untere, zweite Modul 4b bei dessen Montage geschoben wird, so dass unteres und oberes Modul 4b, 4a überlappen. Außerdem weist das untere Profil 5a des Modulrahmens des oberen Moduls 4a eine Nut 41 auf, in die der Mittelsteg 12 der Halteschiene 1 eingreift. Bei dieser Ausführungsform kann die Halteschiene 1 einfacher geformt sein als bei den vorherigen Ausführungsformen. Die Montage der Halteschiene 1 an dem Modulrahmen des Moduls 4a erfolgt ebenfalls durch Eindrehen, wie in Fig. 12 gezeigt wird.

Alle hier beschriebenen Ausführungsformen der Erfindung haben die Eigenschaft, dass die Modulmontage vom First beginnend in Richtung Traufe (also von oben nach unten) erfolgt. Auf diese Weise kann der Monteur jeweils unterhalb (traufseitig) des jeweilig zu montierenden Moduls auf den Dachlatten stehen.

Die Einzelteile des Montagesystems, insbesondere die Halteschiene und das Ablaufblech, können platzsparend jeweils paarweise in dem Hohlraum diagonal untergebracht werden, der durch Gegeneinanderlegen zweier Module mit ihren Unterseiten gebildet wird. Je nach Rahmenhöhe ist dieser Hohlraum bis zu 2 x 50 mm = 100 mm hoch.

Fig. 13 zeigt ein Beispiel für die platzsparende Unterbringung zweier Halteschienen 1. Bei den Halteschienen 1 der Fig. 13 handelt es sich um Halteschienen 1 gemäß Fig. 11 und 12.

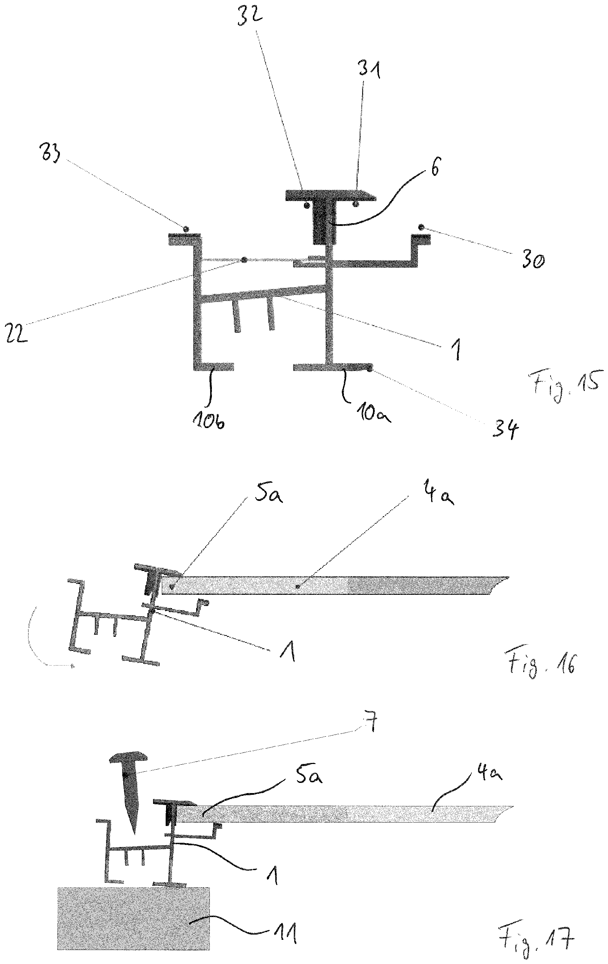

Fig. 14 zeigt eine Ausführungsform eines erfindungsgemäßen Solarmodul-Indachmontagesystems sowie einer Halteschiene 1 für Glas-Glas-Module beziehungsweise Laminate. Bei einer Ausführungsform für Laminate (Fig. 14) wird ein oberes Modul 4a in die mit Dichtprofilen 30, 31, 32, 33 versehene Halteschiene 1 eingedreht (Fig. 15). Beim Festschrauben der Halteschiene 1 wird gleichzeitig das obere Modul 4a zwischen den Dichtprofilen 30 und 31 eingeklemmt. Dadurch erfolgt eine zweistufige Abdichtung. Das untere Modul 4b wird anschließend in den unteren Teil der Halteschiene 1 eingelegt. Der Montageablauf ist in Fig. 16 bis 18 dargestellt.

Wie in Fig. 15 dargestellt ist, kann zum Erleichtern des Eindrehens auf der Dachlatte 11 die hintere Kante (das dem Mittelsteg 6 abgewandte Ende des Auflageelements 10a) mit einer Rundung 34 versehen sein. In die Halteschiene 1 ist ferner ein horizontales Ablaufblech 22 eingelegt.

Fig. 16 bis 18 zeigen die Montage beziehungsweise das Eindrehen der Halteschiene 1. Die Unterkante, also der Seitenrand 5a, des oberen Moduls 4a wird in die Halteschiene 1 eingedreht (Fig. 16) und auf einer Dachlatte 11 mittels der Schraube 7 verschraubt (Fig. 17).

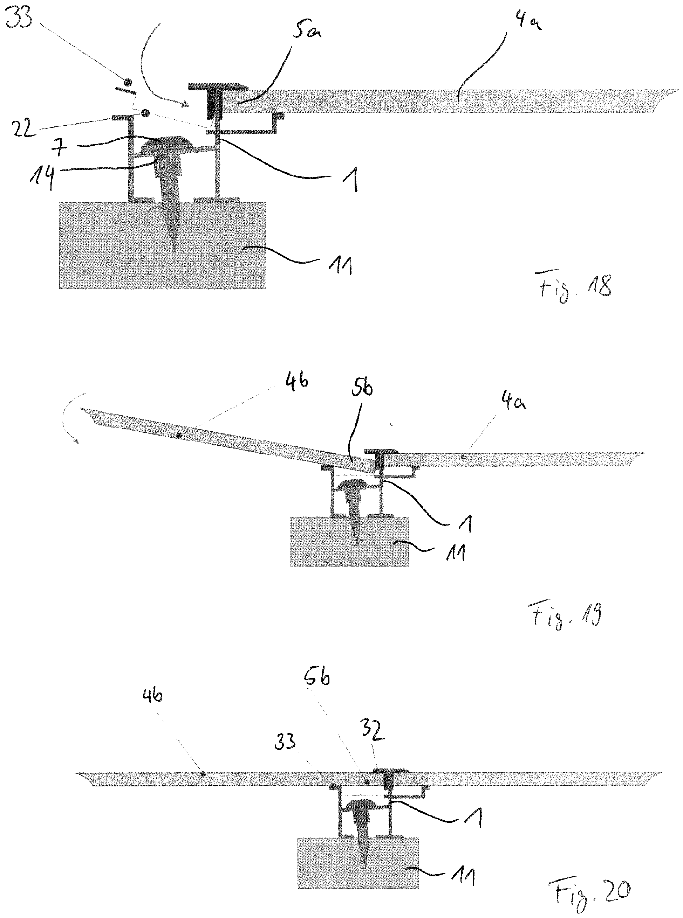

Zur Vermeidung von Wassereintritt in die Lochbohrungen 14 der Halteschiene 1 wird ein Ablaufblech 22 mit Dichtung 33 in die Halteschiene 1 eingelegt (Fig. 18).

Fig. 19 und 20 zeigen das Einlegen und Einklemmen des unteren Moduls 4b in die Halteschiene 1. Das untere Modul 4b wird mit seiner Oberkante, d.h. dem Seitenrand 5b, in die Halteschiene 1 eingelegt (Fig. 19). Bei der Montage der folgenden Halteschiene und dem damit verbundenen Positionieren des unteren Moduls 4b parallel zur Dachfläche wird die Oberkante 5b des unteren Moduls 4b zwischen den Dichtungen 32 und 33 eingeklemmt (Fig. 20). Die vertikale Abführung von Regenwasser geschieht analog zu der oben beschriebenen Ausführungsform für gerahmte Module.

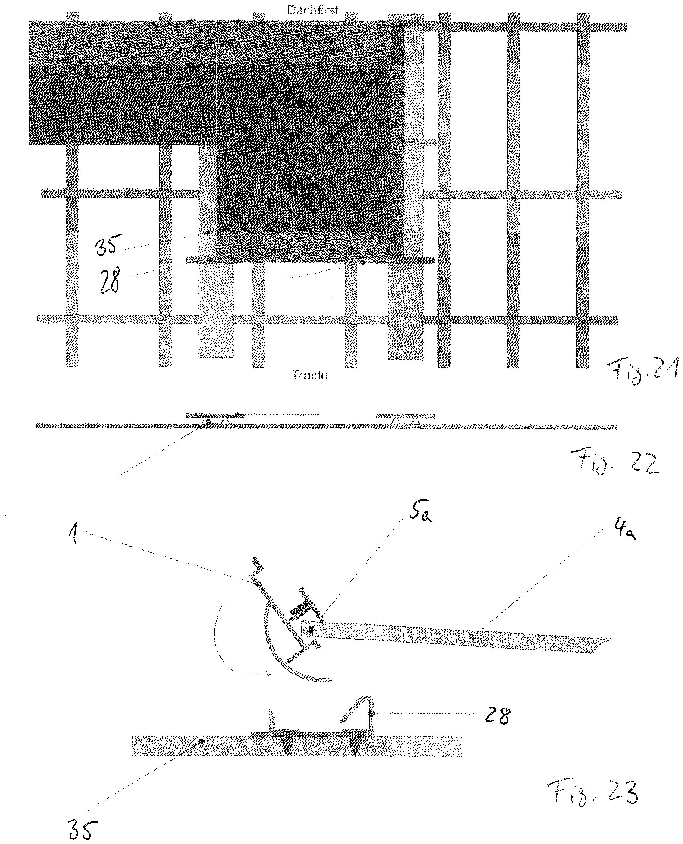

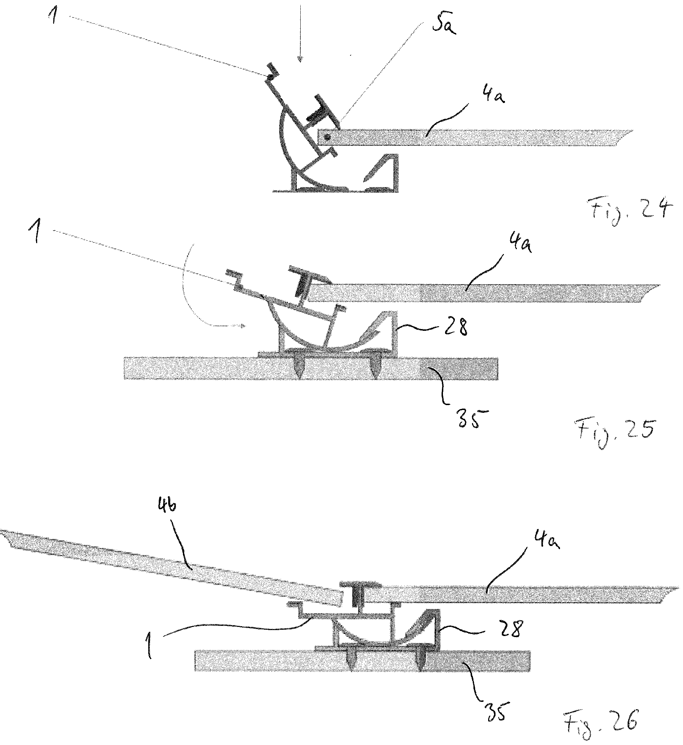

Fig. 21 bis 26 zeigen eine weitere Ausführungsform des erfindungsgemäßen Solarmodul-Indachmontagesystems mit einer Unterkonstruktion. Eine Montagevariante besteht darin, beim Eindrehen der Halteschiene 1 gleichzeitig diese an einem Befestigungsprofil 28 zu befestigen (Fig. 21, 22, 23, 24, 25). Dieses Befestigungsprofil 28 wiederum ist an einem Profilblech 35 befestigt, das seinerseits auf der Unterkonstruktion befestigt ist und zur vertikalen Wasserabführung Richtung Traufe dient. Fig. 26 zeigt das Einlegen des unteren, zweiten Moduls 4b in die Halteschiene 1.

Die folgenden Bezugszeichen wurden verwendet:
- 1: Halteschiene
- 2a: erster Einlegebereich
- 2b: zweiter Einlegebereich
- 4a: erstes Solarmodul
- 4b: zweites Solarmodul
- 5a: Seitenkante erstes Solarmodul
- 5b: Seitenkante zweites Solarmodul
- 6: Mittelbereich
- 7: Befestigungsmittel (Schraube)
- 8a: obere Anschlagsleiste erster Einlegebereich
- 9a: untere Anschlagsleiste erster Einlegebereich
- 8b: obere Anschlagsleiste zweiter Einlegebereich
- 9b: untere Anschlagsleiste zweiter Einlegebereich
- 10a, 10b: Auflageelemente
- 11: Stützvorrichtung (Dachlatte)
- 12: Mittelsteg
- 13: Aufkantung
- 14: Durchgangsöffnung
- 15: Eingriffs-/Rastelement
- 18a, b: vertikale Ablaufrinne (vertikales Ablaufblech)
- 19: Stöße benachbarter Halteschienen
- 21: Klotz
- 22: horizontale Wasserablaufrinne (horizontales Ablaufblech)
- 23a, b: Dichtungen
- 24: Sparren
- 25: Profilschenkel als Anschlag
- 26: Winkel
- 27: Schraubkanal
- 28: Befestigungsprofil
- 29: Klemmstück, Klemmwinkel
- 40: Steg
- 41: Nut
- 30, 31, 32, 33: Dichtprofile
- 34: Rundung
- 35: Profilblech

## Patentansprüche

1. Solarmodul-Indachmontagesystem umfassend mindestens zwei benachbart angeordnete Solarmodule (4a, 4b) und mindestens eine Halteschiene (1),
wobei die Halteschiene (1) zwischen den zwei benachbart angeordneten Solarmodulen angeordnet ist und im Querschnitt einen ersten Einlegebereich (2a) aufweist, welcher eine Seitenkante (5a) eines ersten Solarmoduls (4a) aufnimmt, und einen zweiten Einlegebereich (2b) aufweist, der dem ersten Einlegebereich (2a) benachbart angeordnet ist und eine Seitenkante (5b) eines zweiten Solarmoduls (4b) aufnimmt,
wobei das Solarmodul-Indachmontagesystem eine weitere Halteschiene (1) und mindestens ein weiteres Solarmodul (4a, 4b) umfasst, wobei die weitere Halteschiene (1) zur ersten Halteschiene (1) fluchtend aneinanderstoßend angeordnet ist, und wobei das weitere Solarmodul (4a, 4b) in einen ersten oder zweiten Einlegebereich (2a, 2b) der weiteren Halteschiene (1) eingelegt ist,
wobei die Halteschienen (1) jeweils an ihren Enden an der rechten und linken unteren Ecke ausgeklinkte Bereiche aufweisen, wobei die Halteschienen (1) kürzer sind als die parallel zu den Halteschienen (1) verlaufenden Seitenkanten (5a, 5b) der Solarmodule (4a, 4b),
**dadurch gekennzeichnet, dass**
das Solarmodul-Indachmontagesystem trapezförmige Ablaufbleche (18a, 18b) zur vertikalen Ableitung von Regenwasser umfasst, wobei die trapezförmigen Ablaufbleche (18a, 18b) zwischen nebeneinander angeordneten Solarmodulen verschindelt eingelegt sind,
wobei die Ablaufbleche (18a, 18b) unterhalb der in einer Linie zueinander angeordneten Stöße (19) der Halteschienen (1) in benachbarte ausgeklinkte Bereiche der Halteschienen (1) derart eingelegt sind, dass die Ablaufbleche (18a, 18b) die Stöße (19) abdecken.

2. Solarmodul-Indachmontagesystem nach dem vorhergehenden Anspruch, **dadurch gekennzeichnet, dass** die Halteschienen (1) einen Mittelbereich (6) zur Aufnahme oder Anordnung eines Befestigungsmittels (7) aufweisen,
wobei der erste Einlegebereich (2a) benachbart zu dem Mittelbereich (6) angeordnet ist und der zweite Einlegebereich (2b) dem ersten Einlegebereich (2a) und dem Mittelbereich (6) benachbart angeordnet ist.

3. Solarmodul-Indachmontagesystem nach einem der vorhergehenden Ansprüche, **dadurch gekennzeichnet, dass** der erste Einlegebereich (2a) eine obere und eine untere Anschlagsleiste (8a, 9a) aufweist, wobei die beiden Anschlagsleisten (8a, 9a) das Solarmodul (4a) von oben und unten, die Seitenkante (5a) des ersten Solarmoduls (4a) umgreifend, klemmend erfasst.

4. Solarmodul-Indachmontagesystem nach einem der vorhergehenden Ansprüche, **dadurch gekennzeichnet, dass** der zweite Einlegebereich (2b) eine obere und eine untere Anschlagsleiste (8b, 9b) aufweist, wobei die beiden Anschlagsleisten (8b, 9b) das Solarmodul (4b) von oben und unten, die Seitenkante (5b) des zweiten Solarmoduls (4b) umgreifend, klemmend erfasst.

5. Solarmodul-Indachmontagesystem nach einem der zwei vorhergehenden Ansprüche, **dadurch gekennzeichnet, dass** die untere Anschlagsleiste (9a) des ersten Einlegebereichs (2a) U-förmig in Richtung des Mittelbereichs (6) derart umgefalzt ist, dass der Rahmen eines Solarmoduls (4a) den Falz hintergreifend in die Halteschiene (1) einrastbar ist.

6. Solarmodul-Indachmontagesystem nach einem der vorhergehenden Ansprüche, **dadurch gekennzeichnet, dass** die Halteschienen (1) Auflageelemente (10a, 10b) zur Auflage der Halteschienen (1) auf eine Stützvorrichtung (11), insbesondere auf Dachlatten, aufweisen und gegebenenfalls der Mittelbereich (6) derart ausgestaltet ist, dass das Befestigungsmittel (7) beim Befestigungsvorgang die Halteschienen (1) in Richtung des ersten Einlegebereichs (2a) vorspannt.

7. Solarmodul-Indachmontagesystem nach einem der Ansprüche 3 bis 6, **dadurch gekennzeichnet, dass** die Halteschienen (1) einen Mittelsteg (12) aufweisen, von dem ausgehend auf einer Seite des Mittelsteges (12) die obere und untere Anschlagsleiste (8a, 9a) des ersten Einlegebereichs (2a) sich erstrecken und von dem ausgehend auf der anderen Seite des Mittelsteges (12) die obere Anschlagsleiste (8b) des zweiten Einlegebereichs (2b) sich erstreckt.

8. Solarmodul-Indachmontagesystem nach dem vorhergehenden Anspruch, **dadurch gekennzeichnet, dass** der Mittelsteg (12), die obere und die untere Anschlagsleiste (8a, 9a) des ersten Einlegebereichs (2a) und die obere Anschlagsleiste (8b) des zweiten Einlegebereichs (2b) zu einer Seite des Mittelbereichs (6) angeordnet sind und die untere Anschlagsleiste (9b) des zweiten Einlegebereichs (2b) zur gegenüberliegenden Seite des Mittelbereichs (6) angeordnet ist, derart, dass dazwischen der Bereich zur Montage des Befestigungsmittels (7) zugänglich bleibt.

9. Solarmodul-Indachmontagesystem nach einem der Ansprüche 4 bis 8, **dadurch gekennzeichnet, dass** die untere Anschlagsleiste (9b) des zweiten Einlegebereichs (2b) an ihrem vom Mittelbereich (6) abgewandten Ende eine Aufkantung (13) aufweist, die sich längs der Halteschiene (1) erstreckt und eine Wasserablaufrinne bildet.

10. Solarmodul-Indachmontagesystem nach einem der vorhergehenden Ansprüche, **dadurch gekennzeichnet, dass** der Mittelbereich (6) eine Durchgangsöffnung (14) zur Aufnahme eines Befestigungselementes (7), insbesondere einer Schraube, aufweist und/oder an der Unterseite der Halteschienen (1) ein Eingriffs-oder Rastelement (15) zum Eingreifen oder Verrasten der Halteschienen (1) in oder mit einer Aufnahme (16) eines Befestigungselementes (7) aufweist.

11. Solarmodul-Indachmontagesystem nach einem der Ansprüche 4 bis 10, **dadurch gekennzeichnet, dass** zwischen die untere Anschlagsleiste (9b) des zweiten Einlegebereichs (2b) und das zweite Solarmodul (4b) eine horizontale Wasserablaufrinne (22), insbesondere ein Ablaufblech, eingelegt ist, das sich längs der Halteschiene (1) erstreckt und den Mittelbereich (6) einschließlich des Befestigungsmittels (7) überdeckt.

12. Solarmodul-Indachmontagesystem nach dem vorhergehenden Anspruch, **dadurch gekennzeichnet, dass** die horizontalen Wasserablaufrinnen (22) der Halteschienen (1) derart eingelegt sind, dass die Wasserablaufrinnen an ihren Enden zumindest teilweise in ein zu den Halteschienen (1) senkrecht verlaufendes vertikales Ablaufblech (18a, 18b) münden.

## Claims

1. A solar module in-roof mounting system, comprising at least two solar modules (4a, 4b) arranged adjacent to one another and at least one retaining rail (1),
the retaining rail (1) being arranged between the two solar modules that are arranged adjacent to one another and including, in the cross-section, a first insertion region (2a), which accommodates a lateral edge (5a) of a first solar module (4a), and including a second insertion region (2b), which is arranged adjacent to the first insertion region (2a) and accommodates a lateral edge (5b) of a second solar module (4b),
the solar module in-roof mounting system comprising a further retaining rail (1) and at least one further solar module (4a, 4b), the further retaining rail (1) being arranged abut the first retaining rail (1) in a flush manner, and the further solar module (4a, 4b) being inserted into a first or second insertion region (2a, 2b) of the further retaining rail (1),
the retaining rails (1), at the respective ends thereof at the right and left lower corners, including notched regions, the retaining rails (1) being shorter than the lateral edges (5a, 5b) of the solar modules (4a, 4b) that run parallel to the retaining rails (1),
**characterized in that** the solar module in-roof mounting system comprises trapezoidal drain plates (18a, 18b) for the vertical drainage of rain water, the trapezoidal drain plates (18a, 18b) being inserted in a shingled manner between solar modules arranged next to one another,
the drain plates (18a, 18b) being inserted into adjacent notched regions of the retaining rails (1), beneath the butt joints (19) of the retaining rails (1) that are arranged in a line with respect to one another, such that the drain plates (18a, 18b) cover the butt joints (19).

2. The solar module in-roof mounting system according to the preceding claim, **characterized in that** the retaining rails (1) include a center region (6) for accommodating or arranging a fastening means (7),
the first insertion region (2a) being arranged adjacent to the center region (6), and the second insertion region (2b) being arranged adjacent to the first insertion region (2a) and the center region (6).

3. A solar module in-roof mounting system according to any one of the preceding claims, **characterized in that** the first insertion region (2a) comprises an upper and a lower stop strip (8a, 9a), the two stop strips (8a, 9a) grasping, by clamping, the solar module (4a) from above and beneath, enclosing the lateral edge (5a) of the first solar module (4a).

4. A solar module in-roof mounting system according to any one of the preceding claims, **characterized in that** the second insertion region (2b) comprises an upper and a lower stop strip (8b, 9b), the two stop strips (8b, 9b) grasping, by clamping, the solar module (4b) from above and beneath, enclosing the lateral edge (5b) of the second solar module (4b).

5. A solar module in-roof mounting system according to any one of the two preceding claims, **characterized in that** the lower stop strip (9a) of the first insertion region (2a) is folded over in a U-shaped manner in the direction of the center region (6) such that the frame of a solar module (4a) is able to engage into the retaining rail (1), latching over the fold.

6. A solar module in-roof mounting system according to any one of the preceding claims, **characterized in that** the retaining rails (1) comprise bearing elements (10a, 10b) for the retaining rails (1) to bear on a support device (11), in particular on battens, and, if necessary, the center region (6) is configured such that the fastening means (7), during the fastening process, biases the retaining rails (1) in the direction of the first insertion region (2a).

7. A solar module in-roof mounting system according to any one of claims 3 to 6, **characterized in that** the retaining rails (1) comprise a center web (12), proceeding from which, on one side of the center web (12), the upper and lower stop strips (8a, 9a) of the first insertion region (2a) extend, and proceeding from which, on the other side of the center web (12), the upper stop strip (8b) of the second insertion region (2b) extends.

8. The solar module in-roof mounting system according to the preceding claim, **characterized in that** the center web (12), the upper and lower stop strips (8a, 9a) of the first insertion region (2a), and the upper stop strip (8b) of the second insertion region (2b) are arranged toward one side of the center region (6), and the lower stop strip (9b) of the second insertion region (2b) is arranged toward the opposite side of the center region (6), such that, therebetween, the region for mounting the fastening means (7) remains accessible.

9. A solar module in-roof mounting system according to any one of claims 4 to 8, **characterized in that** the lower stop strip (9b) of the second insertion region (2b), at the end thereof facing away from the center region (6), comprises an upstand (13) which extends along the retaining rail (1) and forms a water drain channel.

10. A solar module in-roof mounting system according to any one of the preceding claims, **characterized in that** the center region (6) includes a through-opening (14) for accommodating a fastening element (7), in particular a screw, and/or, on the bottom side of the retaining rails (1), comprises an engagement or latching element (15) for the retaining rails (1) to engage in or latch with a receptacle (16) of a fastening element (7).

11. A solar module in-roof mounting system according to any one of claims 4 to 10, **characterized in that** a horizontal water drain channel (22), in particular a drain plate, which extends along the retaining rail (1) and covers the center region (6), including the fastening means (7), is inserted between the lower stop strip (9b) of the second insertion region (2b) and the second solar module (4b).

12. A solar module in-roof mounting system according to the preceding claim, **characterized in that** the horizontal water drain channels (22) of the retaining rails (1) are inserted such that the water drain channels, at the ends thereof, open at least partially into a vertical drain plate (18a, 18b) extending perpendicularly to the retaining rails (1).

## Revendications

1. Système de montage de modules solaires sur toit comprenant au moins deux modules solaires (4a, 4b) disposés côte à côte et au moins un rail de maintien (1),
dans lequel le rail de maintien (1) est disposé entre les deux modules solaires adjacents et présente en section transversale une première zone d'insertion (2a), laquelle accueille un bord latéral (5a) d'un premier module solaire (4a), et une seconde zone d'insertion (2b) disposée de façon adjacente à la première zone d'insertion (2a) et accueillant un bord latéral (5b) d'un deuxième module solaire (4b),
le système de montage de modules solaires sur toit comprenant un autre rail de maintien (1) et au moins un autre module solaire (4a, 4b), l'autre rail de maintien (1) étant disposé en alignement contigu avec le premier rail de maintien (1), et l'autre module solaire (4a, 4b) étant inséré dans une première ou une seconde zone d'insertion (2a, 2b) de l'autre rail de maintien (1),
les rails de maintien (1) présentant chacun des zones crantées aux coins inférieurs droit et gauche au niveau de leurs extrémités, les rails de maintien (1) étant plus courts que les bords latéraux (5a, 5b) parallèles aux rails de maintien (1) des modules solaires (4a, 4b), **caractérisé en ce que**
le système de montage de modules solaires sur toit comprend des plaques de drainage trapézoïdales (18a, 18b) pour le drainage vertical de l'eau de pluie, les plaques de drainage trapézoïdales (18a, 18b) étant insérées entre les modules solaires disposés les uns à côté des autres,
les plaques de drainage (18a, 18b) étant insérées sous des joints (19) des rails de maintien (1) disposés en ligne les uns par rapport aux autres dans des zones encochées adjacentes des rails de maintien (1) de telle sorte que les plaques de drainage (18a, 18b) recouvrent les joints (19).

2. Système de montage des modules solaires sur toit selon l'une des revendications précédentes, **caractérisé en ce que** les rails de maintien (1) présentent une zone centrale (6) destinée à recevoir ou disposer un moyen de fixation (7),
la première zone d'insertion (2a) étant disposée de façon adjacente par rapport à la zone centrale (6) et la deuxième zone d'insertion (2b) étant disposée de façon adjacente à la première zone d'insertion (2a) et à la zone centrale (6).

3. Système de montage de modules solaires sur toit selon l'une des revendications précédentes, **caractérisé en ce que** la première zone d'insertion (2a) présente une barre d'arrêt inférieure et supérieure (8a, 9a), les deux barres d'arrêt (8a, 9a) saisissant le module solaire (4a) par le dessus et par le dessous, englobant par serrage le bord latéral (5a) du premier module solaire (4a).

4. Système de montage de modules solaires sur toit selon l'une des revendications précédentes, **caractérisé en ce que** la deuxième zone d'insertion (2b) présente une barre d'arrêt supérieure et une barre d'arrêt inférieure (8b, 9b), les deux barres d'arrêt (8b, 9b) saisissant le module solaire (4b) par le dessus et par le dessous, englobant par serrage le bord latéral (5b) du deuxième module solaire (4b).

5. Système de montage de modules solaires sur toit selon l'une des deux revendications précédentes, **caractérisé en ce que** la barre d'arrêt inférieure (9a) de la première zone d'insertion (2a) est repliée en forme de U en direction de la zone centrale (6) de telle sorte que le cadre d'un module solaire (4a) peut être encliqueté dans le rail de maintien (1), s'engageant derrière le pli.

6. Système de montage de modules solaires sur toit selon l'une des revendications précédentes, **caractérisé en ce que** les rails de maintien (1) présentent des éléments de support (10a, 10b) pour placer les rails de maintien (1) sur un dispositif de support (11), en particulier sur des lattes de toit, et, si nécessaire, la zone centrale (6) est conçue de telle sorte que les moyens de fixation (7) pendant le processus de fixation tendent les rails de maintien (1) en direction de la première zone d'insertion (2a).

7. Système de montage de modules solaires sur toit selon l'une des revendications 3 à 6, **caractérisé en ce que** les rails de maintien (1) présentent une âme centrale (12), à partir de laquelle les barres d'arrêt supérieure et inférieure (8a, 9a) de la première zone d'insertion (2a) s'étendent sur un côté de l'âme centrale (12) et à partir de laquelle la barre d'arrêt supérieure (8b) de la deuxième zone d'insertion (2b) s'étend sur l'autre côté de l'âme centrale (12).

8. Système de montage de modules solaires selon la revendication précédente, **caractérisée en ce que** l'âme centrale (12), les barres d'arrêt supérieure et inférieure (8a, 9a) de la première zone d'insertion (2a) et la barre d'arrêt supérieure (8b) de la deuxième zone d'insertion (2b) sont disposés sur un côté de la zone centrale (6) et la barre d'arrêt inférieure (9b) de la deuxième zone d'insertion (2b) est disposée de l'autre côté de la zone centrale (6), de telle sorte que la zone de montage des moyens de fixation (7) reste accessible dans l'intervalle.

9. Système de montage de modules solaires sur toit selon l'une des revendications 4 à 8, **caractérisée en ce que** la barre d'arrêt inférieure (9b) de la deuxième zone d'insertion (2b) présente, à son extrémité éloignée de la zone centrale (6), un rebord (13) qui s'étend le long du rail de maintien (1) et forme un canal de drainage de l'eau.

10. Système de montage de modules solaires sur toit selon l'une des revendications précédentes, **caractérisé en ce que** la zone centrale (6) présente un trou traversant (14) destiné à recevoir un moyen de fixation (7), en particulier une vis et/ou, au niveau du côté inférieur des rails de mainien (1), un élément d'engagement ou de verrouillage (15) pour engager ou verrouiller les rails de maintien (1) dans ou avec un réceptacle (16) d'un moyen de fixation (7).

11. Système de montage de modules solaires sur toit selon l'une des revendications 4 à 10, **caractérisé en ce qu'**entre la barre d'arrêt inférieure (9b) de la deuxième zone d'insertion (2b) et le deuxième module solaire (4b) est inséré un canal d'évacuation d'eau horizontal (22), en particulier une plaque de drainage, qui s'étend le long du rail de maintien (1) et qui recouvre la zone centrale (6) y compris les moyens de fixation (7).

12. Système de montage de module solaires sur toit selon la revendication précédente, **caractérisé en ce que** les canaux d'évacuation d'eau horizontaux (22) des rails de maintien (1) sont insérés de telle manière que les canaux d'évacuation d'eau débouchent à leurs extrémités au moins partiellement dans une plaque de drainage verticale (18a, 18b) s'étendant perpendiculairement aux rails de maintien (1).
